# EUROPEAN PATENT APPLICATION

(11) **EP 4 378 618 A1**
(43) Date of publication of application: **05.06.2024**
(21) Application number: 23212101.2
(22) Date of filing: 24.11.2023
(51) Int. Cl.: B23K 26/144, B22F 10/25, B22F 12/70, B23K 26/14, B23K 26/34

(54) **GAS SHIELDING METHOD USING A DUAL GAS NOZZLE, DUAL GAS NOZZLE, AND EXTERNAL NOZZLE OUTER CYLINDER**

(30) Priority: 29.11.2022 JP 2022190242
(71) Applicant: Sumitomo Heavy Industries Himatex Co., Ltd., Niihama-shi, Ehime 792-0001 (JP)
(72) Inventor: ISHIKAWA, Takeshi, Niihama-shi, 792-0001 (JP)
(74) Representative: Mewburn Ellis LLP

(57) **Abstract**

To provide a simple and inexpensive gas shielding method that can reduce interference between the nozzle (2, 4) and the material to be treated in addition to achieving a high shielding effect, and a simple and inexpensive dual gas nozzle (2, 4) that can be suitably used for the gas shielding method. Also provided is an external nozzle outer cylinder (4) that can be suitably used for the gas shielding method of the present invention. The gas shielding method comprises the step of jetting a first inert gas from the inside of the nozzle inner cylinder (2), jetting a second inert gas from a gap between the nozzle inner cylinder (2) and the nozzle outer cylinder (4), which surrounds the side surface of the nozzle inner cylinder (2), and protruding the bottom surface of the nozzle inner cylinder (2) from the bottom surface of the nozzle outer cylinder (4).

## Description

### TECHNICAL FIELD

The present invention relates to a gas shielding method that can be used for metal cladding, welding, and the like, and relates to a dual gas nozzle for use in the gas shielding method, and an external nozzle outer cylinder.

### BACKGRAOUND ART

Metal cladding and welding are processes in which metal melted by using various heat sources such as arcs and lasers is solidified, and the influences of the process atmosphere to various properties of the resulting cladded layer and welded portions are extremely significant. Generally, an inert gas such as argon is used to shield the area in the vicinity of the molten metal to prevent atmospheric contamination, but if shielding is insufficient, the surface of the solidified molten area is oxidized and in addition, defects such as blowholes are formed.

On the other hand, for example, Patent Document 1 (JP 2021-194657) discloses "a gas shield jig that is provided on a torch for gas shield welding for welding in a shield gas atmosphere and that shields the periphery of a portion to be welded from the atmosphere includes a support portion fixed to the torch, a skeletal member held by the support portion in an elastically deformable manner and arranged around the torch, and a seat member covering the skeletal member and surrounding the torch, wherein the skeletal member is shaped in such a manner as to flare from a torch base end side toward a torch end side along an axis of the torch, and the seat member has an opening at the torch base end side."

In the gas shield jig described in Patent Document 1, it is said that "it is possible to weld while reliably covering the torch with shielding gas even during additive manufacturing where obstacles are likely to occur in the torch trajectory, and that suppresses the reduction in the degree of freedom in designing the laminated artificial products."

Patent Document 2 (JP 2021-126681) discloses, "a gas shield welding method performed by using an electrode which is installed within a hollow cylindrical nozzle and is protruded from an opening part of the nozzle shields discharge generated from a tip of the electrode so as not to bring into contact with an atmosphere by the use of shield gas which flows within the nozzle and blows off from an opening part of the nozzle, and makes a flow of shield gas within the nozzle into two flows of an inside gas flow around the electrode and an outside gas flow which flows around the inside gas flow along an inner wall of the nozzle, wherein a flow rate of the outside gas flow is larger than a flow rate of the inside gas flow."

In the gas shielded welding method described in Patent Document 2, it is said that " the outer gas flow having a high flow rate prevents the atmosphere from entering the vicinity of the electrode, and it is possible to maintain high shielding performance. Further, since there is a difference in flow velocity, the temperature of the outer gas flow is lower than the temperature of the inner gas flow, and this temperature difference also makes it possible to maintain high shielding performance.

### PRIOR ART DOCUMENT

### PATENT DOCUMENT

Patent Document 1: Japanese Un-examined Patent Application Publication No. 2021-194657
Patent Document 2: Japanese Un-examined Patent Application Publication No. 2021-126681

### SUMMARY OF THE INVENTION

### PROBLEM TO BE SOLVED BY THE INVENTION

However, the gas shield jig of Patent Document 1 shields the torch and the portion to be welded from the atmosphere by covering them with a shield member, and it is necessary to adjust the shape and size of the shield member according to the material to be processed. Further, for example, when cladding or welding is performed on a part of a large metal part with a complicated shape, it is often assumed that the shield member interferes with the large metal part. In addition, since spatter adheres to the shield member, even if fireproof or flameproof sheet is used, it is necessary to replace frequently, which causes problems from the viewpoint of work efficiency and process cost.

In the gas shielded welding method of Patent Document 2, a dual nozzle with a complicated and expensive structure is required to form an inner gas flow and an outer gas flow. Further, since the diameter of the nozzle of the dual nozzle inevitably increases, problem as to interference to materials to be treated and surrounding structures occurs when compared to usual nozzles, and thus there are cases where it is difficult to position the nozzle at an arbitrary location.

In addition, in welding of titanium or a titanium alloy which is easily oxidized and in laser metal deposition where problemed micro defects such as blowholes are formed, there is highly required for gas shielding properties, and the conventional gas shielding methods cannot fully satisfy those requirements.

In view of the above problems in the prior arts, the purpose of the present invention is to provide a simple and inexpensive gas shielding method where interference between the nozzle and the material to be processed can be reduced, in addition to achieving a high shielding effect, and a simple and inexpensive dual gas nozzle that can be suitably used for the gas shielding method. Another object of the present invention is to provide a simple and inexpensive external nozzle outer cylinder that can be suitably used for the gas shield method of the present invention.

### MEANS TO SOLVE THE INVENTION

In order to achieve the above object, the present inventors have conducted extensive studies as to the gas shielding methods for welding, or the like, and the gas nozzles used for the gas shielding methods, and, as a result, have found that it is extremely effective to make the bottom surface of the nozzle inner cylinder of the dual gas nozzle protrude from the bottom surface of the nozzle outer cylinder, and then have reached the present invention.

Namely, the present invention can provide a gas shielding method using a gas shield nozzle having a nozzle inner cylinder and a nozzle outer cylinder, characterized by:
jetting a first inert gas from the inside of the nozzle inner cylinder,
jetting a second inert gas from a gap between the nozzle inner cylinder and the nozzle outer cylinder, which surrounds the side surface of the nozzle inner cylinder, and
protruding the bottom surface of the nozzle inner cylinder from the bottom surface of the nozzle outer cylinder.

In the conventional dual gas nozzles generally, it is usual that the bottom surfaces of the nozzle inner cylinder and the nozzle outer cylinder on the same plane, or that the nozzle outer cylinder protrudes, and according to these constructions, it is considered that the shielding effect by the outer shield gas which jets from the gap between the nozzle inner cylinder and the nozzle outer cylinder. However, since the nozzle outer cylinder makes the tip of the dual gas nozzle thicker, it is difficult to bring the nozzle close to the area to be treated.

On the other hand, the inventor has found that the shielding effect of the dual gas nozzle is sufficient even when the nozzle outer cylinder is shorter than the nozzle inner cylinder and the nozzle inner cylinder protrudes from the nozzle outer cylinder, and that a good shielding effect can be obtained without protruding the nozzle outer cylinder to bring the shield gas injection position closer to the area to be treated. In the dual gas nozzle with this configuration, the tip of the nozzle is only the nozzle inner cylinder, and thus the diameter of the tip can be similar to that of a general gas nozzle. As a result, the dual gas nozzle can be easily handled and the nozzle tip can be placed close to the area to be treated.

In addition, when the bottom surface of the nozzle inner cylinder protrudes from the bottom surface of the nozzle outer cylinder, a better shielding effect can be obtained than the case that the bottom surface of the nozzle inner cylinder is in the same plain as the bottom surface of the nozzle outer cylinder, or the case that the bottom surface of the nozzle outer cylinder protrudes from the bottom surface of the nozzle inner cylinder. Although the reason for the improved shielding effect by jetting the second inert gas at a position further away from the desired gas shielded area is not necessarily clear, it may be considered that the oxygen penetration is effectively suppressed by suppressing the turbulence (atmospheric entrainment) of the inert gas, by shielding a wide area with the inert gas, and the like.

In the gas shielding method of the present invention, it is preferrable that the distance between the bottom surface of the nozzle inner cylinder and the bottom surface of the nozzle outer cylinder is 3 mm or more. By setting the distance between the bottom surface of the nozzle inner cylinder and the bottom surface of the nozzle outer cylinder to 3 mm or more, it is possible to improve the handling the gas nozzle. In addition, by setting the distance between the bottom surface of the nozzle inner cylinder and the bottom surface of the nozzle outer cylinder to 3 mm or more, it is possible to improve the shielding effect of the second inert gas. The distance between the bottom surface of the nozzle inner cylinder and the bottom surface of the nozzle outer cylinder is more preferably 5 mm or more, and most preferably 7.5 mm or more.

Here, from the viewpoint of forming an effective gap (slit) between the nozzle inner cylinder and the nozzle outer cylinder, it is necessary that the height of the nozzle outer cylinder is at least 5 mm. That is, for example, when the height of the nozzle inner cylinder is 30 mm, the upper limit of the distance between the bottom surface of the nozzle inner cylinder and the bottom surface of the nozzle outer cylinder is 25 mm.

Further, in the gas shield method of the present invention, it is preferrable that a sweepback angle is set to the gas shield nozzle with respect to the direction of travel of the gas shield nozzle. When the area heated by laser or arc, etc. is gas-shielded, the target area remains hot for a certain period of time after the heat source has passed through. On the other hand, when setting the sweepback angle to the gas shield nozzle, it is possible to improve the shielding effect behind the gas shield nozzle.

Further, in the gas shielding method of the present invention, it is preferable to achieve the welding of titanium or titanium alloys. In welding of the titanium materials, from the viewpoint of preventing oxidation, it is desirable to maintain a low oxygen concentration in the heated area until the area is cooled to 350°C. On the other hand, by using the gas shielding method of the present invention, it is possible to widely shield the area around the area to be heated and efficiently suppress the increase in oxygen concentration.

Further, in the gas shielding method of the present invention, it is preferrable that a laser beam is irradiated along the central axis of the nozzle inner cylinder. By irradiating the laser beam along the central axis of the nozzle inner cylinder, the area around the laser beam and in the vicinity of the surface of the material to be treated where the laser beam is irradiated can be effectively covered by the shielding gas.

Further, in the gas shielding method of the present invention, it is preferable that a metal cladding layer is formed by using laser metal deposition. Since the laser metal deposition is a method where a metal cladding layer is formed by melting a raw material metal powder and the like by laser and rapidly cooling and solidifying on the surface of any base material, the reaction with oxygen in the atmosphere greatly affects the various properties of the metal cladding layer. On the other hand, according to the gas shielding method of the present invention, it is possible not only to effectively shield the penetration of oxygen into the area to be processed, but also to bring the tip of the torch for the laser metal deposition closer to the area to be processed, if necessary.

Further, the present invention can provide a dual gas nozzle, comprising:
a nozzle inner cylinder through which a first inert gas flows, and
a nozzle outer cylinder which is provided surrounding the side surface of the nozzle inner cylinder and forms a gap between the nozzle inner cylinder and the nozzle outer cylinder through which a second inert gas flows,
wherein the bottom surface of the nozzle inner cylinder protrudes from the bottom surface of the nozzle outer cylinder.

The most significant feature of the dual gas nozzle is that the bottom surface of the nozzle inner cylinder protrudes from the bottom surface of the nozzle outer cylinder, and since the diameter of the nozzle inner cylinder is smaller than that of the nozzle outer cylinder, the nozzle has a good handling property. For example, when bringing the tip of the torch for the laser metal deposition close to the area to be processed, it is basically sufficient to consider whether or not the nozzle inner cylinder interferes.

In the dual gas nozzle of the present invention, it is preferable that the distance between the bottom surface of the nozzle inner cylinder and the bottom surface of the nozzle outer cylinder is 3 mm or more. By setting the distance between the bottom surface of the nozzle inner cylinder and the bottom surface of the nozzle outer cylinder to 3 mm or more, it is possible to ensure the enough handling property of the gas nozzle in addition to obtain remarkable gas shielding effect. The distance between the bottom surface of the nozzle inner cylinder and the bottom surface of the nozzle outer cylinder is more preferably 5 mm or more, and most preferably 7.5 mm or more.

Here, from the viewpoint of forming an effective gap (slit) between the nozzle inner cylinder and the nozzle outer cylinder, it is necessary that the height of the nozzle outer cylinder is at least 5 mm. That is, for example, when the height of the nozzle inner cylinder is 30 mm, the upper limit of the distance between the bottom surface of the nozzle inner cylinder and the bottom surface of the nozzle outer cylinder is 25 mm.

Furthermore, in the dual gas nozzle of the present invention, it is preferable that the nozzle inner cylinder is provided with a pathway through which a powder supplying carrier gas flows. When providing the nozzle inner cylinder with the pathway through which a powder supplying carrier gas flows, the dual gas nozzle can be used for the laser metal deposition. More specifically, while supplying a raw material powder from the nozzle inner cylinder to the surface of the base material, it is possible to form an arbitrary integrated molded article by irradiating the laser to the raw material powder. In addition, it is possible to effectively suppress the penetration of oxygen into the area where the temperature is increased by the laser irradiation.

Furthermore, the present invention can provide an external nozzle outer cylinder to be attached to a nozzle inner cylinder through which a first inert gas flows, comprising:
a fixing mechanism which fixes the external nozzle outer cylinder while surrounding the side surface of the nozzle inner cylinder and forms a gap between the nozzle inner cylinder and the external nozzle outer cylinder through which a second inert gas flows, wherein
the bottom surface of the nozzle inner cylinder protrudes from the bottom surface of the nozzle outer cylinder in the state that the both nozzle cylinders are fixed by the fixing mechanism.

The external nozzle outer cylinder is attached to the outside of a conventional common gas nozzle to achieve the same effect as the dual gas nozzle of the present invention. By fixing the external nozzle outer cylinder to the nozzle inner cylinder by using the fixing mechanism described above, the bottom surface of the nozzle inner cylinder can protrude from the bottom surface of the nozzle outer cylinder while forming the gap where the second inert gas flows between the external nozzle outer cylinder and the nozzle inner cylinder.

In the external nozzle outer cylinder, it is preferrable to provide with a position adjustment mechanism for controlling the distance between the bottom surface of the nozzle inner cylinder and the bottom surface of the nozzle outer cylinder, wherein the distance is 3 mm or more. By providing with the position adjustment mechanism, it is possible to protrude the bottom surface of the nozzle inner cylinder from the bottom surface of the nozzle outer cylinder regardless of the length of the nozzle inner cylinder, and the distance between the bottom surface of the nozzle inner cylinder and the bottom surface of the nozzle outer cylinder can be adjusted to 3 mm or more.

The position adjustment mechanism is not particularly limited as long as the effects of the present invention are not impaired, and various conventionally known position adjustment mechanisms can be used. For example, the position of the nozzle outer cylinder may be raised or lowered by a screw mechanism, or an appropriate fastening part may be provided.

### Effects of the Invention

According to the present invention, it is possible to provide a simple and inexpensive gas shielding method that can reduce interference between the nozzle and the material to be treated in addition to achieving a high shielding effect, and a simple and inexpensive dual gas nozzle that can be suitably used for the gas shielding method. Further, according to the present invention, it is possible to provide an external nozzle outer cylinder that can be suitably used for the gas shielding method of the present invention.

### Brief Description of Drawings

Fig. 1 is a schematic diagram showing one embodiment of the gas shielding method of the present invention.
Fig. 2 is a schematic diagram showing one embodiment of the dual gas nozzle of the present invention.
Fig. 3 is a schematic diagram showing one embodiment of the dual gas nozzle of the present invention (application to laser metal deposition).
Fig. 4 is a schematic diagram showing one embodiment of the external nozzle outer cylinder of the present invention.
Fig. 5 is a schematic diagram of the position adjustment mechanism 26.
Fig. 6 is a schematic diagram of the state where the position adjustment mechanism 26 is attached to the nozzle inner cylinder 2.
Fig. 7 is a schematic diagram of the state where the external nozzle outer cylinder 20 is attached to the nozzle inner cylinder 2.
Fig. 8 is a schematic diagram showing the flowing state of the second inert gas.
Fig. 9 is a schematic diagram showing how to control the distance between the bottom surface of the nozzle inner cylinder 2 and the bottom surface of the nozzle outer cylinder 4 (case where the length of the nozzle inner cylinder 2 is different).
Fig. 10 is a schematic diagram showing how to control the distance between the bottom surface of the nozzle inner cylinder 2 and the bottom surface of the nozzle outer cylinder 4 (case when the outer diameters of the nozzle inner cylinder 2 are different).
Fig. 11 is a cross-sectional schematic diagram showing how to measure the oxygen concentration in Example 1.
Fig. 12 is a graph showing the oxygen concentration when the flow rate of the second inert gas is 20 l/min in Example 1.
Fig. 13 is a graph showing the oxygen concentration when the flow rate of the second inert gas is set to 30 l/min in Example 1.
Fig. 14 is a graph showing the effect of the flow rate of the second inert gas and the distance between the bottom surface of the nozzle inner cylinder and the bottom surface of the nozzle outer cylinder on the oxygen concentration.
Fig. 15 is a cross-sectional schematic diagram showing how to measure the oxygen concentration in Example 2.
Fig. 16 is a graph showing the oxygen concentration in Example 2.
Fig. 17 is a cross-sectional schematic diagram showing how to measure the oxygen concentration in Example 3.
Fig. 18 is a graph showing the oxygen concentration in Example 3.
Fig. 19 shows appearance photographs of each laser welded portion obtained in Example 4.
Fig. 20 shows enlarged photographs of the laser welded portions obtained in Example 4.
Fig. 21 shows simulation results when the laser scanning speed is 3.0 m/min in Example 4.
Fig. 22 shows simulation results when the laser scanning speed is 3.5 m/min in Example 4.

### MODE FOR CARRYING OUT THE INVENTION

In the following, by referring the drawings, the typical embodiments of the gas shielding method of the present invention, the dual gas nozzle and the external nozzle outer cylinder are explained in detail. However, the present invention is not particularly limited to the embodiments shown in the drawings, and since these drawings are presented to explain the concept of the present invention, there are cases where ratios and numbers are exaggerated or simplified as necessary for ease of understanding. Furthermore, in the following explanation, the same symbol is given to the same or corresponding parts, and there is a case where overlapping explanation is omitted.

### 1. Gas Shielding Method

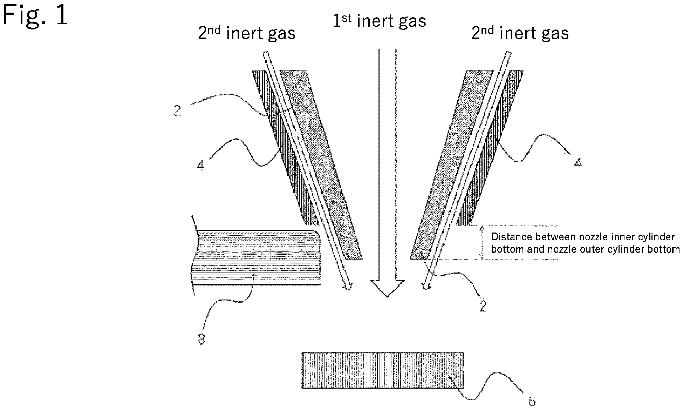

Fig. 1 is a schematic diagram showing one embodiment of the gas shielding method of the present invention. The schematic diagram in Fig. 1 is a cross-sectional view and shows the state where the first inert gas is jetted out from inside the nozzle inner cylinder 2 and the second inert gas is jetted out from the gap between the nozzle inner cylinder 2 and the nozzle outer cylinder 4, which is provided surrounding the side surface of the nozzle inner cylinder 2, to gas shield the surface of the base material 6.

Here, the bottom surface of the nozzle inner cylinder 2 protrudes from the bottom surface of the nozzle outer cylinder 4 (the bottom surface of the nozzle outer cylinder 4 is set back from the bottom surface of the nozzle inner cylinder 2), and even when the nozzle is vertical to the surface of the base material 6, the entire nozzle can be brought close to the base material 6 by avoiding obstacles 8.

Further, in addition to the first inert gas, by jetting out the second inert gas, it is possible to remarkably effectively suppress the penetration of oxygen to the vicinity of the surface of the base material 6. Here, the first inert gas and the second inert gas may be the same type of inert gas or different type of inert gases. The type of inert gas is not particularly limited as long as the effects of the present invention are not impaired, and various conventionally known inert gases such as for example argon gas and nitrogen gas can be used. Further a mixture of appropriate gases may also be used.

Further, the flow rate at which the first inert gas and second inert gas are jetted out may be appropriately adjusted according to the type of inert gas used, the distance to the area to be gas-shielded, the size of the area, and the like. Further, the flow rate of the first inert gas and the flow rate of the second inert gas may be set to the same value or to different values. Here, the flow rate of the second inert gas is preferably 5 to 25 l/min, more preferably 10 to 20 l/min. By setting the flow rate of the second inert gas in the range, the shielding effect by using the second inert gas can be obtained more reliably.

It is preferrable that the distance between the bottom surface of the nozzle inner cylinder 2 and the bottom surface of the nozzle outer cylinder 4 is 3 mm or more. By setting the distance between the bottom surface of the nozzle inner cylinder 2 and the bottom surface of the nozzle outer cylinder 4 to 3 mm or more, it is possible to improve the handling the gas nozzle. In addition, by setting the distance between the bottom surface of the nozzle inner cylinder 2 and the bottom surface of the nozzle outer cylinder 4 to 3 mm or more, it is possible to improve the shielding effect of the second inert gas. The distance between the bottom surface of the nozzle inner cylinder 2 and the bottom surface of the nozzle outer cylinder 4 is more preferably 5 mm or more, and most preferably 7.5 mm or more.

Here, from the viewpoint of forming an effective gap (slit) between the nozzle inner cylinder 2 and the nozzle outer cylinder 4, it is necessary that the height of the nozzle outer cylinder 4 is at least 5 mm. That is, for example, when the height of the nozzle inner cylinder 2 is 30 mm, the upper limit of the distance between the bottom surface of the nozzle inner cylinder 2 and the bottom surface of the nozzle outer cylinder 4 is 25 mm.

Further, it is preferrable that a sweepback angle is set to the gas shield nozzle with respect to the direction of travel of the gas shield nozzle. When the area heated by laser or arc, etc. is gas-shielded, the target area remains hot for a certain period of time after the heat source has passed through. On the other hand, when setting the sweepback angle to the gas shield nozzle, it is possible to improve the shielding effect behind the gas shield nozzle. The value of the sweepback angle is not particularly limited as long as the effects of the present invention are not impaired, and can be appropriately adjusted according to the desired gas shielding condition, and, for example, can be set to 10 to 30°.

Further, in the gas shielding method of the present invention, it is preferable to achieve the welding of titanium or titanium alloys. In welding of the titanium materials, from the viewpoint of preventing oxidation, it is desirable to maintain a low oxygen concentration in the heated area until the area is cooled to 350 °C. More specifically, it is preferable that the oxygen concentration at the highest reached temperature during the welding is 0.3% or less. On the other hand, by using the gas shielding method of the present invention, the oxygen concentration in the area with the highest shielding effect can be reliably lowered to 0.3% or less, and, in addition thereto, it is possible to widely shield the area around the area to be heated and efficiently suppress the increase in oxygen concentration.

Further, it is preferrable that a laser beam is irradiated along the central axis of the nozzle inner cylinder 2. By irradiating the laser beam along the central axis of the nozzle inner cylinder 2, the area around the laser beam and in the vicinity of the surface of the material to be treated (base material 6) where the laser beam is irradiated can be effectively covered by the shielding gas.

Further, according to the gas shielding method of the present invention, it is possible to be suitably used for forming the metal cladding layer by using laser metal deposition. Since the laser metal deposition is a method where a metal cladding layer is formed by melting a raw material metal powder and the like by laser and rapidly cooling and solidifying on the surface of any base material, the reaction with oxygen in the atmosphere greatly affects the various properties of the metal cladding layer. On the other hand, according to the gas shielding method of the present invention, it is possible not only to effectively shield the penetration of oxygen into the area to be processed, but also to bring the tip of the torch for the laser metal deposition closer to the area to be processed, if necessary.

### 2. Dual gas nozzle

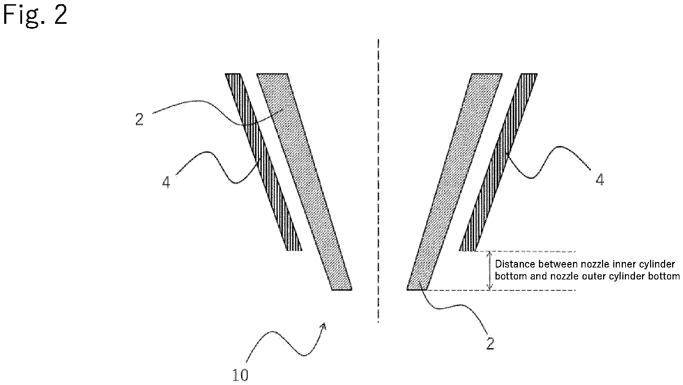

Fig. 2 is a schematic diagram showing one embodiment of the dual gas nozzle of the present invention. The schematic diagram in Fig. 2 is a longitudinal cross-sectional view and, and the dual gas nozzle is provided with the nozzle inner cylinder 2 through which the first inert gas flows, and the nozzle outer cylinder 4 which is provided surrounding the side surface of the nozzle inner cylinder 2 and forms a gap between the nozzle inner cylinder 2 and the nozzle outer cylinder through which the second inert gas flows.

Further, the most significant feature of the dual gas nozzle 10 is the positional relationship between the bottom surface of the nozzle inner cylinder 2 and the bottom surface of the nozzle outer cylinder 4, and the bottom surface of the nozzle inner cylinder 2 protrudes from the bottom surface of the nozzle outer cylinder 4. The nozzle inner cylinder 2 and the nozzle outer cylinder 4 may be machined from a bulk material as a single piece, or the nozzle inner cylinder 2 and the nozzle outer cylinder 4 may be joined by welding or mechanical fastening (joined portion being not shown).

It is preferable that the distance between the bottom surface of the nozzle inner cylinder 2 and the bottom surface of the nozzle outer cylinder 4 is 3 mm or more. By setting the distance between the bottom surface of the nozzle inner cylinder 2 and the bottom surface of the nozzle outer cylinder 4 to 3 mm or more, it is possible to obtain both the excellent shielding effect and the handling property of the gas nozzle. The distance between the bottom surface of the nozzle inner cylinder and the bottom surface of the nozzle outer cylinder is more preferably 5 mm or more, and most preferably 7.5 mm or more.

From the viewpoint of forming an effective gap (slit) between the nozzle inner cylinder 2 and the nozzle outer cylinder 4, it is necessary that the height of the nozzle outer cylinder 4 is at least 5 mm. That is, for example, when the height of the nozzle inner cylinder 2 is 30 mm, the upper limit of the distance between the bottom surface of the nozzle inner cylinder 2 and the bottom surface of the nozzle outer cylinder 4 is 25 mm.

The materials of the nozzle inner cylinder 2 and the nozzle outer cylinder 4 are not limited as long as the effects of the present invention are not impaired, and various conventionally known materials used for gas nozzles can be used. For example, stainless steel can be used to provide good corrosion resistance, and aluminum or aluminum alloys can be used to reduce weight.

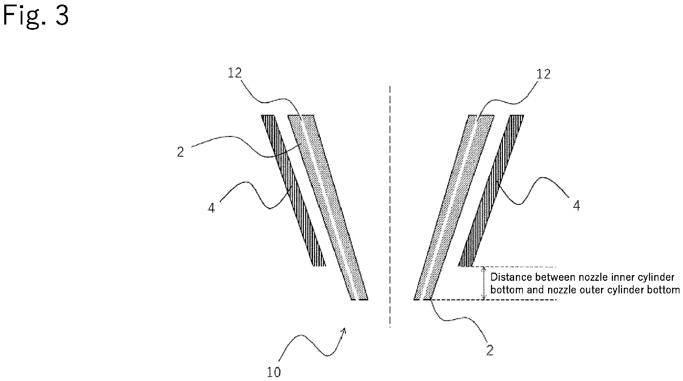

Fig. 3 is a schematic diagram showing one embodiment of the dual gas nozzle that can be suitably used for the laser metal deposition. The nozzle inner cylinder 2 is provided with the pathway 12 through which a powder supplying carrier gas flows. When providing the nozzle inner cylinder 2 with the pathway 12 through which the powder supplying carrier gas flows, the dual gas nozzle 10 can be used for the laser metal deposition. More specifically, while supplying a raw material powder from the nozzle inner cylinder 2 to the surface of the base material, it is possible to form an arbitrary integrated molded article by irradiating the laser to the raw material powder. In addition, it is possible to effectively suppress the penetration of oxygen into the area where the temperature is increased by the laser irradiation.

The shape and size of the pathway 12 are not particularly limited as long as the effects of the present invention are not impaired, and can be appropriately adjusted according to the type, size, shape, desired supply volume of the raw material powder, and the like.

### 3. External nozzle outer cylinder

Fig, 4 is a schematic diagram showing one embodiment of the external nozzle outer cylinder (the side view is a schematic cross-sectional view). The external nozzle outer cylinder 20 is an external nozzle outer cylinder to be attached to the nozzle inner cylinder 2 in which the first inert gas flows inside thereof, and has an outer cylinder portion 22, a fixing mechanism 24, and a position adjustment mechanism 26.

The fixing mechanism 24 is a mechanism for fixing the external nozzle outer cylinder 20 with the side surface of the nozzle inner cylinder 2 surrounded and forming a gap for flowing the second inert gas between the external nozzle outer cylinder and the nozzle inner cylinder 2, and can simply be a fixing mechanism using screws. For example, by adjusting the position of the screws, the bottom surface of the nozzle inner cylinder 2 can be made to protrude from the bottom surface of the external nozzle outer cylinder 20.

Further, the outer cylinder portion 22 can be moved up and down the outer circumference of the position adjustment mechanism 26. As a result, the distance between the bottom surface of the nozzle inner cylinder 2 and the bottom surface of the nozzle outer cylinder 4 can be set to any value. The method for moving the outer cylinder portion 22 up and down along the outer circumference of the position adjustment mechanism 26 is not particularly limited as long as the effects of the present invention are not impaired, and for example, threaded grooves are formed on the inner surface of the outer cylinder portion 22 and the outer circumference of the position adjustment mechanism 26, and by rotating along the threaded grooves, the outer cylinder portion 22 can be moved up and down. Alternatively, the inner surface of the outer cylinder portion 22 and the outer circumference of the position adjustment mechanism 26 are fixed by frictional force, the position of the outer cylinder portion 22 can also be adjusted by applying an external force. Here, it is preferable that the distance between the bottom surface of the nozzle inner cylinder 2 and the bottom surface of the nozzle outer cylinder 4 can be adjusted to be 3 mm or more, by ensuring that the outer cylinder portion 22 can move a sufficient distance.

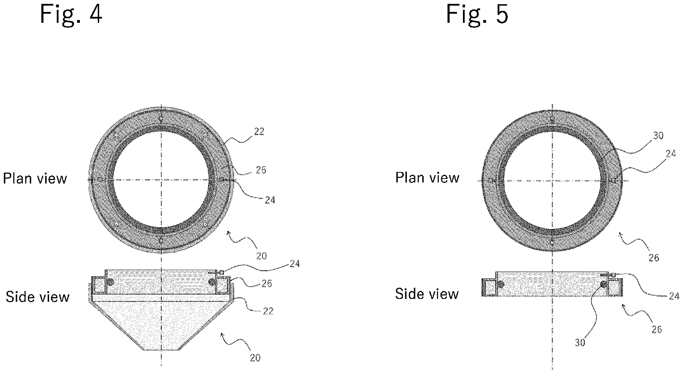

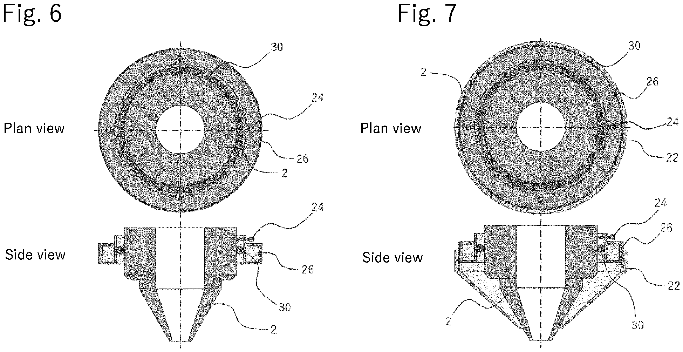

Fig. 5 shows a schematic diagram of the position adjustment mechanism 26, and Fig. 6 shows a schematic diagram of the position adjustment mechanism 26 attached to the nozzle inner cylinder 2 (each side view is a schematic cross-sectional view). The position adjustment mechanism 26 is provided with the fixing mechanism 24 and can be fixed at any position in the nozzle inner cylinder 2. Further, the position adjustment mechanism 26 has an inner diameter adjustment mechanism 30, which can adjust the inner diameter of the position adjustment mechanism 26 according to the outer diameter of the nozzle inner cylinder 2. The inner diameter adjustment mechanism 30 may be a ring-like member that can be installed at the innermost circumference of the position adjustment mechanism 26, and, for example, a ring-like elastic body can be used. By using ring-like elastic elements with different thicknesses, the inner diameter of the position adjustment mechanism 26 can be set to any desired value.

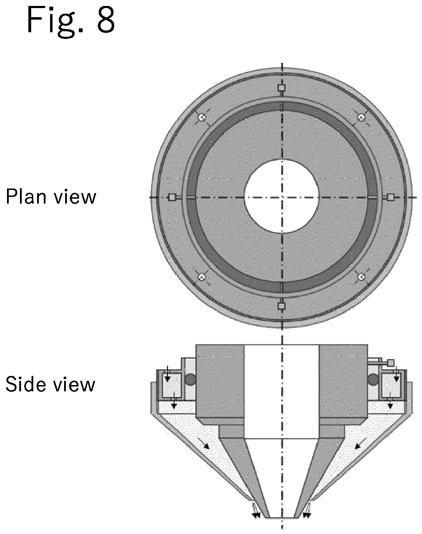

Fig. 7 shows a schematic diagram of the external nozzle outer cylinder 20 attached to the nozzle inner cylinder 2 (each side view is a schematic cross-sectional view). Since the outer cylinder portion 22 is connected to the position adjustment mechanism 26, and can move up and down the outer circumference of the position adjustment mechanism 26, the distance between the bottom surface of the nozzle inner cylinder 2 and the bottom surface of the nozzle outer cylinder 4 can be set to any value. Further, when the external nozzle outer cylinder 20 is fixed on the side surface of the nozzle inner cylinder 2 in the manner to surround the side surface of the nozzle inner cylinder 2 by the fixing mechanism 24 and the position adjustment mechanism 26 to form the gap between external nozzle outer cylinder and the nozzle inner cylinder 2, the second inert gas can flow through the gap, as shown by the arrow in Fig. 8.

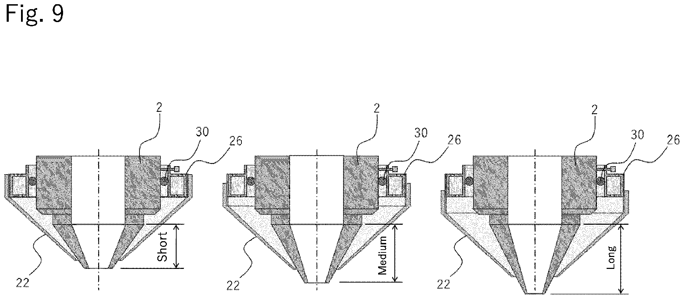

In the case of different lengths of the nozzle inner cylinder 2, an example of controlling the distance between the bottom surface of the nozzle inner cylinder 2 and the bottom surface of the nozzle outer cylinder 4 is schematically shown in Fig. 9. In this case, the distance between the bottom surface of the nozzle inner cylinder 2 and the bottom surface of the nozzle outer cylinder 4 can be set to any value by moving the outer cylinder portion 22 up and down along the outer circumference of the position adjustment mechanism 26. It is preferable that the distance between the bottom surface of the nozzle inner cylinder 2 and the bottom surface of the nozzle outer cylinder 4 can be adjusted to be 3 mm or more.

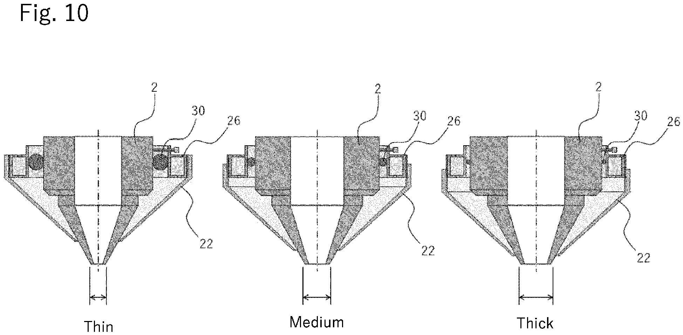

In the case of different outer diameters of the nozzle inner cylinder 2, an example of controlling the distance between the bottom surface of the nozzle inner cylinder 2 and the bottom surface of the nozzle outer cylinder 4 is schematically shown in Fig. 10. In this case, the inner diameter of the position adjustment mechanism 26 is adjusted to the outer diameter of the nozzle inner cylinder 2 by using the inner diameter adjustment mechanism 30, and then the position adjustment mechanism 26 is fixed to the nozzle inner cylinder 2. In this state, the distance between the bottom surface of the nozzle inner cylinder 2 and the bottom surface of the nozzle outer cylinder 4 can be set to any value by moving the outer cylinder portion 22 up and down along the outer circumference of the position adjustment mechanism 26. It is preferable that the distance between the bottom surface of the nozzle inner cylinder 2 and the bottom surface of the nozzle outer cylinder 4 can be adjusted to be 3 mm or more.

The materials of the outer cylinder portion 22 is not particularly limited as long as the effects of the present invention are not impaired, and various conventionally known materials used for gas nozzles can be used. For example, stainless steel can be used to provide good corrosion resistance, and aluminum or aluminum alloys can be used to reduce weight.

The gas shield method, dual gas nozzle, and external nozzle outer cylinder of the present invention will be further described by way of examples, but the present invention is not limited in any way to these examples.

### EXAMPLE

### <Example 1>

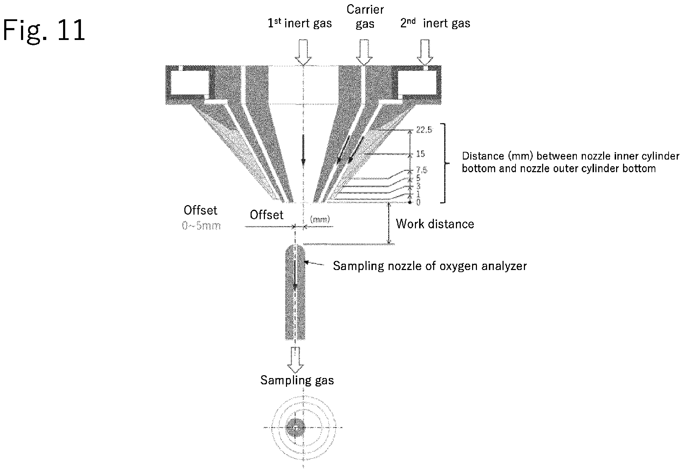

A shield gas flowed in the manner shown in the cross-sectional schematic diagram in Fig. 11, and the oxygen concentration was measured by using a sampling nozzle of the oxygen analyzer. A gas shielded nozzle for the laser metal deposition was used, and a slit was provided in the nozzle inner cylinder to supply the raw material powder. The nozzle outer cylinder was provided to enclose the side surface of the nozzle inner cylinder, and the gap was formed between the nozzle inner cylinder and the nozzle outer cylinder for jetting out the second inert gas. The outer diameter of the bottom surface of the nozzle inner cylinder was set to 13.4 mm, and the gap between the nozzle inner cylinder and the nozzle outer cylinder was set to 1 mm.

The bottom surface of the nozzle inner cylinder protruded from the bottom surface of the nozzle outer cylinder, and the distance between the bottom surface of the nozzle inner cylinder and the bottom surface of the nozzle outer cylinder was set to 1 mm, 3 mm, 5 mm, 7.5 mm, 15 mm, and 22.5 mm by varying the height of the nozzle outer cylinder with respect to the constant height of the nozzle inner cylinder. As a comparison, the case without the nozzle outer cylinder (without the second inert gas) was also studied. In Fig. 11, the case of each nozzle outer cylinder having different heights is shown in the superimposed manner.

Argon gas was jetted out from the inside of the nozzle inner cylinder at 20 l/min as the first inert gas, and argon gas was jetted out from the slit of the nozzle inner cylinder at 7 l/min as the carrier gas. Note that only argon gas was jetted out from the slit of the nozzle inner cylinder, and no raw powder for laser metal deposition was used. Argon gas was jetted out at 10, 20, 30, or 40 l/min as the second inert gas from the gap between the nozzle outer cylinder and the nozzle inner cylinder.

The distance from the bottom surface of the nozzle inner cylinder to the tip of the sampling nozzle of the oxygen analyzer was 13 mm, and the position of the tip of the sampling nozzle of the oxygen analyzer was varied. The case that the sampling nozzle of the oxygen analyzer was positioned at the center axis of the nozzle inner cylinder is assumed to be 0 mm, and, when offset horizontally by 1 to 5 mm, the oxygen concentration at each position was measured.

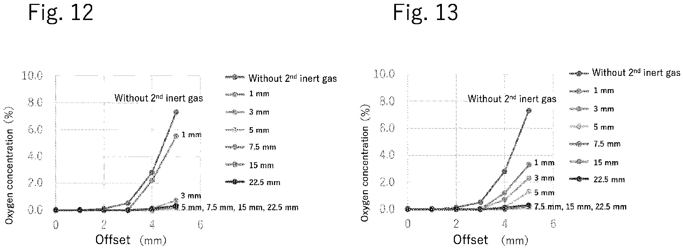

The oxygen concentration when the flow rate of the second inert gas was 20 l/min is shown in Fig. 12, and the oxygen concentration when the flow rate was 30 l/min is shown in Fig. 13, respectively. The numerical values (mm) illustrated in the vicinity of the plots in the figures are the distance between the bottom surface of the nozzle inner cylinder and the bottom surface of the nozzle outer cylinder. The results of Fig. 12 and Fig. 13 show that, regardless of the flow rate of the second inert gas, when the bottom surface of the nozzle inner cylinder protruded from the bottom surface of the nozzle outer cylinder, a good shielding effect was obtained in comparison to the case when the bottom surface of the nozzle inner cylinder and the bottom surface of the nozzle outer cylinder were at the same position.

Specifically, when the outer cylinder nozzle is not used, the oxygen concentration increases as the offset position becomes larger than 2 mm, resulting in a decrease in shielding effect. On the other hand, when the bottom surface of the inner cylinder nozzle protrudes from the bottom surface of the outer cylinder nozzle, a lower oxygen concentration is maintained, and this effect is particularly pronounced when the distance between the bottom surface of the inner cylinder nozzle and the bottom surface of the outer cylinder nozzle is 3 mm or more.

When focusing on the flow rate of the second inert gas, when the distance between the bottom surface of the inner cylinder nozzle and the bottom surface of the outer cylinder nozzle is set to 1 mm, the gas shielding effect is improved by increasing the flow rate, but when an appropriate distance is set, no improvement in the gas shielding effect is observed even if the flow rate of the second inert gas is increased, and conversely the effect tends to decrease.

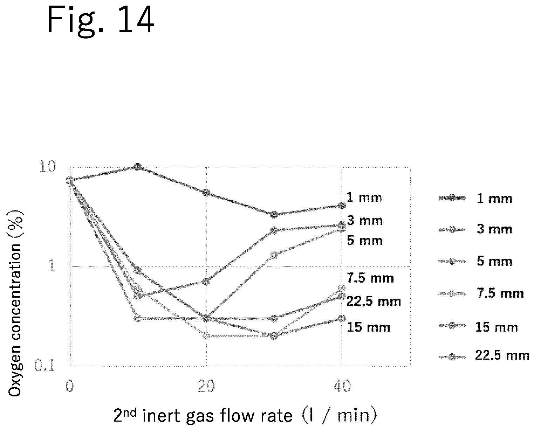

With respect to the oxygen concentration measured under each condition, the relationship between the flow rate of the second inert gas and the distance between the bottom surface of the inner cylinder nozzle and the bottom surface of the outer cylinder nozzle when the offset is 5 mm is shown in Fig. 14. The numerical values (mm) illustrated in the vicinity of the plots in the figure are the distance between the bottom surface of the nozzle inner cylinder and the bottom surface of the nozzle outer cylinder. It can be seen that the oxygen concentration in the gas shielded area is affected by the distance between the bottom surface of the nozzle inner cylinder and the bottom surface of the nozzle outer cylinder and the gas flow rate, and can be controlled by these values.

### <Example 2>

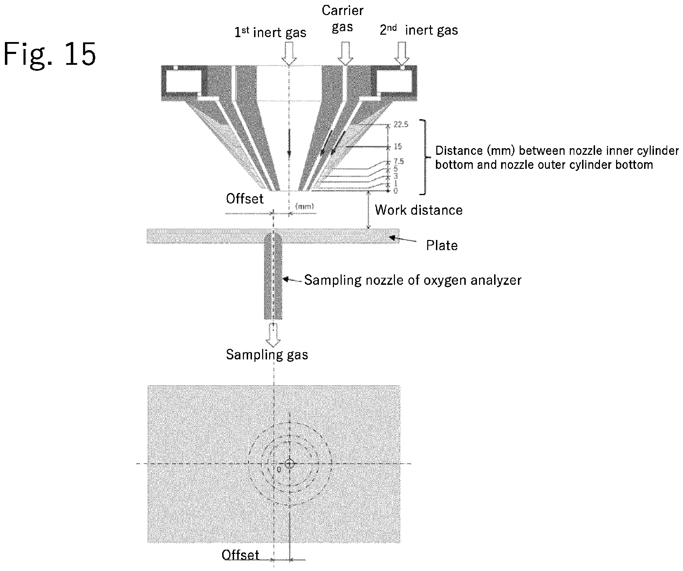

The oxygen concentration at each position was measured in the same manner as in Example 1, except that a flat plate was placed around the tip of the sampling nozzle of the oxygen analyzer. A cross-sectional schematic diagram of this situation is shown in Fig. 15. In Fig. 15, the case of each nozzle outer cylinder at different heights is shown in the superimposed manner. The flow rate of the second inert gas was 20 l/min. A through hole was provided in the flat plate, and the sampling nozzle of the oxygen analyzer was inserted into the through hole and fixed.

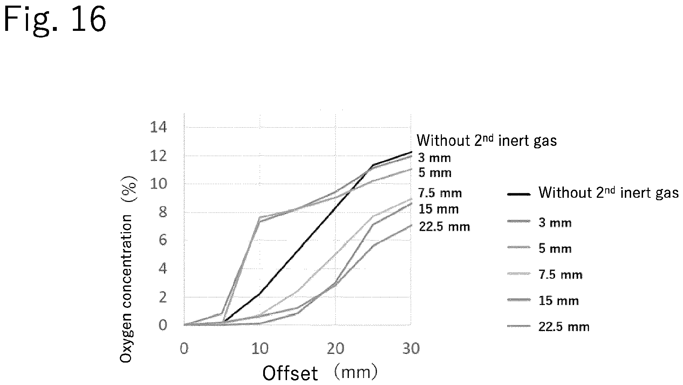

The obtained oxygen concentrations are shown in Fig. 16. When the distance between the bottom surface of the inner cylinder nozzle and the bottom surface of the outer cylinder nozzle is small, the shielding effect is slightly weakened in the area where the offset amount is small, but, even in such a condition, in the area where the offset amount is large, the improvement in shielding effect can be observed by the flow of the second inert gas. Further, when the distance between the bottom surface of the inner cylinder nozzle and the bottom surface of the outer cylinder nozzle is 7.5 mm or more, a significant improvement in shielding effect can be observed at all positions. Note, when the distance between the bottom surface of the inner cylinder nozzle and the bottom surface of the outer cylinder nozzle is 3 and 5 mm, the oxygen concentration is higher at an offset amount of 5 to 15 mm. This suggests that when the distance between the bottom surface of the inner cylinder nozzle and the bottom surface of the outer cylinder nozzle is 5 mm or less, the flow immediately after the jetting of the first inert gas is disturbed by the second inert gas.

### <Example 3>

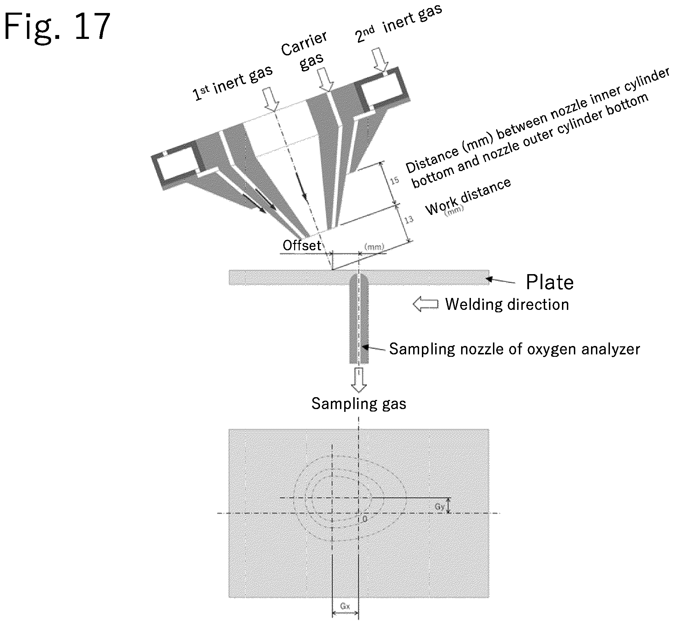

The oxygen concentration at each position was measured in the same manner as in Example 2, except that the gas shield nozzle was tilted 20°. A cross-sectional schematic diagram of this situation is shown in Fig. 17. The distance between the bottom surface of the inner cylinder nozzle and the bottom surface of the outer cylinder nozzle was 15 mm, and the flow rate of the second inert gas was 20 l/min. As a comparison, the oxygen concentration was also measured when the outer cylinder nozzle was not used (when the second inert gas was not jetted out).

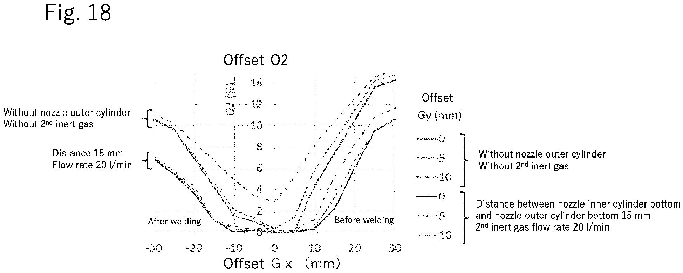

The obtained oxygen concentrations are shown in Fig. 18. In all positions, the oxygen concentration is lower when the second inert gas is jetted out, and the oxygen concentration is lower with the increase of the distance between the bottom surface of the inner cylinder nozzle and the bottom surface of the outer cylinder nozzle. In particular, the oxygen concentration is less than 0.3% in the region where the offset amount is up to ±5 mm.

Further, the distribution of the oxygen concentration is different on the + side and the - side of the offset, and the shielding effect is higher on the - side. In the welding with the sweepback angle, since the - side of Fig. 18 corresponds to after the welding, a better shielding effect can be obtained in the cooling process of the welded portion by providing a sweepback angle to the gas shield nozzle.

### <Example 4>

The laser welding was performed on a 3 mm x 50 mm x 100 mm pure titanium plate by bead-on-plate by using the same gas shield nozzle as in Example 1. For the laser welding, an industrial laser light source consisting of a ϕ0.6 mm core fiber coupled with a high-power semiconductor laser was used. The wavelength of the laser was 940 to 1060 nm. The laser beam diameter on the surface of the pure titanium plate was ϕ2.5 mm, argon gas was jetted out from the inside of the nozzle inner cylinder at 20 l/min as the first inert gas, and argon gas was jetted out from the slit of the nozzle inner cylinder at 7 l/min as the carrier gas. Note that only argon gas was jetted out from the slit of the nozzle inner cylinder, and no raw powder for laser metal deposition was used. Other gas shielding conditions and laser welding conditions are shown in Table 1.

**[Table 1]**

| Exp. No. | Laser output power (W) | Laser scanning speed (mm/sec) | Distance between nozzle bottoms (mm) | Second inert gas flow rate (l/min) | Tilting (deg.) | Bead color |
|---|---|---|---|---|---|---|
| 1 | 2000 | 50 | - | 0 | 0 | Gold |
| 2 | 2000 | 50 | 15 | 25 | 0 | Silver |
| 3 | 2000 | 50 | 15 | 25 | 20 | Silver |
| 4 | 2000 | 25 | - | 0 | 0 | Oat |
| 5 | 3000 | 50 | - | 0 | 0 | Blue |
| 6 | 3000 | 50 | 15 | 25 | 0 | Silver |
| 7 | 3000 | 50 | 15 | 25 | 20 | Silver |
| 8 | 3000 | 33.3 | - | 0 | 0 | Pale blue |
| 9 | 3000 | 33.3 | 15 | 25 | 0 | Silver to Gold |
| 10 | 3000 | 33.3 | 15 | 25 | 20 | Silver |

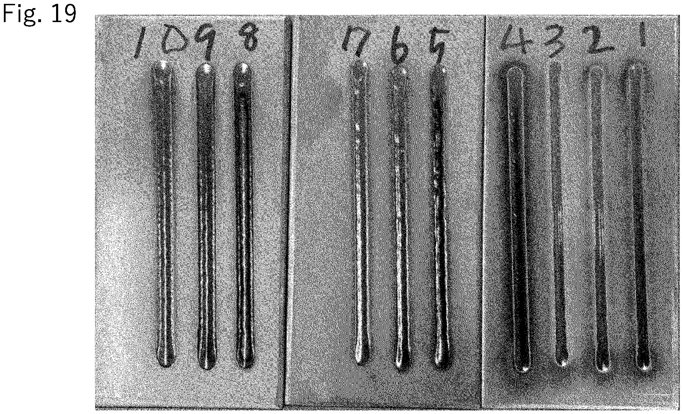

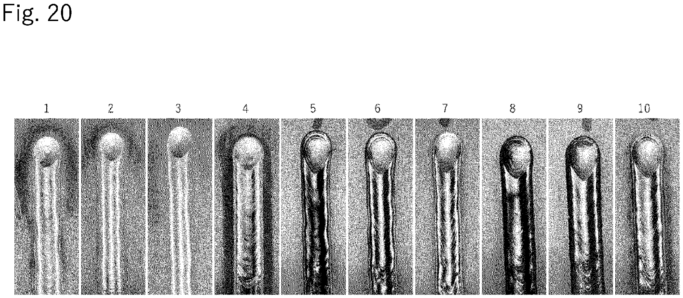

The bead color of each laser welded portion obtained was checked with naked eyes. The results obtained are shown in Table 1. In addition, a photograph of the external appearance of each laser welded portion and an enlarged photograph of the laser welded portion are shown in Fig. 19 and Fig. 20, respectively. The numbers shown in the figures are the experimental numbers. When oxidation is most suppressed, the color is "silver," and it can be seen that the oxidation is effectively suppressed by using the gas shielding method of the present invention.

In order to study the effect of the gas shielding method of the present invention on the suppression of oxidation of titanium welded portion in more detail, the temperature distribution during the laser welding of the pure titanium was calculated by using a software (Quick Welder) available from Research Center for Computational Mechanics, Inc. For the calculation, the physical properties of pure titanium (specific gravity: 4510 kg/m³, specific heat: 519 J/kg-K, thermal conductivity: 17.0 W/m-K) published by Japan Titanium Society were used, and the laser beam absorption rate was set to 50%. The laser welding conditions were as follows: laser output of 1.5 kW, laser scanning speed of 3.0 m/min or 3.5 m/min, and beam diameter of ϕ5 mm. The cooling conditions during the laser welding were as follows: the backside of the area to be welded was cooled, while other areas were left to cool.

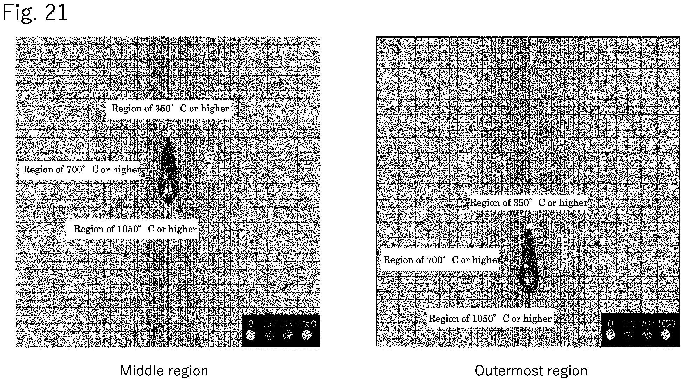

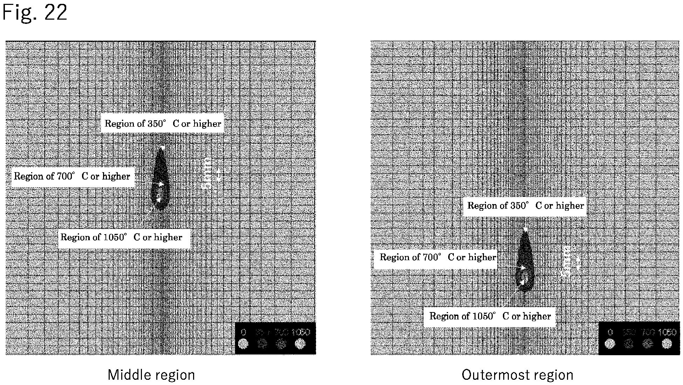

Fig. 21 and Fig. 22 show the simulation results when the laser scanning speed was 3.0 m/min and 3.5 m/min, respectively. The temperature distribution of the welded portion is shown in three colors, with the central region at 1050°C or higher, the middle region at 700°C or higher, and the outermost region at 350°C or higher. In other words, for all laser scanning speeds, the maximum diameter of the area at a high temperature of 1050°C or higher is about 10 mm, and, for example, Fig. 18 shows that the oxygen concentration in this area is extremely low. Further, a sufficient shielding effect is also obtained in the region of 350°C or higher. As a result, as shown in Fig. 19 and Fig. 20, a good joint can be obtained by using the gas shielding method of the present invention, even when welding of titanium materials that are easily oxidized.

### EXPLANATION OF NUMERALS

- 2: Nozzle inner cylinder,
- 4: Nozzle outer cylinder,
- 6: Base material
- 8: Obstacle,
- 10: Dual gas nozzle,
- 12: Pathway,
- 20: External nozzle outer cylinder,
- 22: Outer cylinder portion,
- 24: Fixing mechanism,
- 26: Position adjustment mechanism,
- 30: Inner diameter adjustment mechanism.

## Claims

1. A gas shielding method using a gas shield nozzle having a nozzle inner cylinder and a nozzle outer cylinder, **characterized by**:
jetting a first inert gas from the inside of the nozzle inner cylinder,
jetting a second inert gas from a gap between the nozzle inner cylinder and the nozzle outer cylinder, which surrounds the side surface of the nozzle inner cylinder, and
protruding the bottom surface of the nozzle inner cylinder from the bottom surface of the nozzle outer cylinder.

2. The gas shielding method according to claim 1, wherein the distance between the bottom surface of the nozzle inner cylinder and the bottom surface of the nozzle outer cylinder is 3 mm or more.

3. The gas shielding method according to claim 1 or 2, wherein a sweepback angle is set to the gas shield nozzle with respect to the direction of travel of the gas shield nozzle.

4. The gas shielding method according to claim 1 or 2, wherein welding of titanium or a titanium alloy is achieved.

5. The gas shielding method according to claim 1 or 2, wherein a laser beam is irradiated along the central axis of the nozzle inner cylinder.

6. The gas shielding method according to claim 1 or 2, wherein a metal cladding layer is formed by using laser metal deposition.

7. A dual gas nozzle, comprising:
a nozzle inner cylinder through which a first inert gas flows, and
a nozzle outer cylinder which is provided surrounding the side surface of the nozzle inner cylinder and forms a gap between the nozzle inner cylinder and the nozzle outer cylinder through which a second inert gas flows,
wherein the bottom surface of the nozzle inner cylinder is protruded from the bottom surface of the nozzle outer cylinder.

8. The dual gas nozzle according to claim 7, wherein the distance between the bottom surface of the nozzle inner cylinder and the bottom surface of the nozzle outer cylinder is 3 mm or more.

9. The dual gas nozzle according to claim 7 or 8, wherein the nozzle inner cylinder is provided with a pathway through which a powder supplying carrier gas flows.

10. An external nozzle outer cylinder to be attached to a nozzle inner cylinder through which a first inert gas flows, comprising:
a fixing mechanism which fixes the external nozzle outer cylinder while surrounding the side surface of the nozzle inner cylinder and forms a gap between the nozzle inner cylinder and the external nozzle outer cylinder through which a second inert gas flows, wherein
the bottom surface of the nozzle inner cylinder protrudes from the bottom surface of the nozzle outer cylinder in the state that the both nozzle cylinders are fixed by the fixing mechanism.

11. The external nozzle outer cylinder according to claim 10, which comprises a position adjustment mechanism for controlling the distance between the bottom surface of the nozzle inner cylinder and the bottom surface of the nozzle outer cylinder, wherein the distance is 3 mm or more.
